# EUROPÄISCHE PATENTANMELDUNG

(11) **EP 4 450 868 A1**
(43) Veröffentlichungstag der Anmeldung: **23.10.2024**
(21) Anmeldenummer: 24167162.7
(22) Anmeldetag: 28.03.2024
(51) Int. Cl.: F21V 7/00, F21V 7/04, F21V 8/00, F21S 8/00, F21V 21/30, F21V 21/35, F21Y 105/12, F21Y 113/20, F21Y 115/10

(54) **ANORDNUNG ZUR LICHTABGABE MIT GERICHTETER UND DIFFUSER LICHTABGABE**

(30) Priorität: 20.04.2023 DE 102023109991
(71) Anmelder: Zumtobel Lighting GmbH, 6850 Dornbirn (AT)
(72) Erfinder: Eberle, Daniel, 6851 Dornbirn (AT); Covi, Matthias, 6851 Dornbirn (AT); Leibmann, Holger, 6851 Dornbirn (AT); Öttl, Thomas, 6851 Dornbirn (AT)
(74) Vertreter: Thun, Clemens

(57) **Zusammenfassung**

Anordnung zur Lichtabgabe (1) mit einer diffusen sowie mit einer gerichteten Lichtabgabe, welche ein Lichtquellen-Trägerelement (100), eine gitterartige Lichtleiterstruktur (200) zur diffusen Lichtabgabe und zumindest einen Lichtstrahler (300) zur gerichteten Lichtabgabe aufweist. Die gitterartige Lichtleiterstruktur (200) ist hierbei durch miteinander verbundene Lichtleiterarme (270) gebildet, welche wiederum Zwischenräume (250) der Gitterstruktur bilden. Jeder der vorhandenen Lichtstrahler (300) ist jeweils in einem Zwischenraum (250) der gitterartigen Lichtleiterstruktur (200) angeordnet.

## Beschreibung

Die Erfindung betrifft eine Anordnung zur Lichtabgabe (bzw. eine Leuchte), welche diffuses Licht über eine Gitter- bzw. Rasterstruktur abgibt, und weiterhin auch zur gerichteten Lichtabgabe ausgebildet ist, und so optimiert für verschiedene Beleuchtungsszenarien verwendet werden kann. So ist mit einer derartigen Anordnung zur Lichtabgabe sowohl eine angenehme Raumbeleuchtung realisierbar, als auch eine gezielte Beleuchtung bestimmter Bereiche im Raum.

Bisher bekannte Anordnungen zur Lichtabgabe erfüllen entweder stets lediglich eine gerichtete Beleuchtung bestimmter Bereiche in einem Raum, sogenannte Spotlights, bzw. Leuchten zur Arbeitsplatzbeleuchtung, oder lediglich eine diffuse Raumbeleuchtung. Das Zusammenwirken sowohl einer diffusen als auch einer gerichteten Lichtabgabe wird durch solche Leuchten nicht erzielt.

Der Erfindung liegt die Aufgabe zugrunde, eine Anordnung zur Lichtabgabe anzugeben, die vielseitig verwendet werden kann, und in verschiedensten Beleuchtungsszenarien eine optimierte Beleuchtung bereitstellt.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Anordnung zur Lichtabgabe (bzw. eine Leuchte) vorgesehen, welche ein Lichtquellen-Trägerelement, eine gitterartige Lichtleiterstruktur zur diffusen Lichtabgabe sowie zumindest einen Lichtstrahler zur gerichteten Lichtabgabe aufweist. Auf dem Lichtquellen-Trägerelement sind Lichtquellen, umfassend erste Lichtquellen und zumindest eine zweite Lichtquelle, angeordnet. Die gitterartige Lichtleiterstruktur gibt hierbei über eine Lichtabgabeseite diffus Licht ab, wobei die gitterartige Lichtleiterstruktur selbst durch Lichtleiterarme gebildet ist. Hierbei sind an stirnseitigen Enden der Lichtleiterarme die ersten Lichtquellen angeordnet, deren Licht in die Lichtleiterarme eingekoppelt wird. Weiterhin weisen die Lichtleiterarme Lichtauskoppelstrukturen auf einer dem Lichtquellen-Trägerelement zugewandten Seite der gitterartigen Lichtleiterstruktur auf, wobei die Lichtabgabeseite der gitterartigen Lichtleiterstruktur auf der den Lichtauskoppelstrukturen gegenüberliegenden Seite der gitterartigen Lichtleiterstruktur ist. Jeder der Lichtstrahler zur gerichteten Lichtabgabe der Anordnung zur Lichtabgabe ist in einem Zwischenraum der gitterartigen Lichtleiterstruktur angeordnet, wobei jedem Lichtstrahler eine zweite Lichtquelle zugeordnet ist.

Hierdurch wird eine Anordnung zur Lichtabgabe geschaffen, welche äußerst platzsparend eine äußerst ästhetische diffuse Lichtabgabe über eine gitterartigen Lichtleiterstruktur mit einer besonders effektiven gerichteten Lichtabgabe über zumindest einen Lichtstrahler kombiniert, sodass insgesamt eine besonders vielseitige und flexible Verwendung der Anordnung zur Lichtabgabe, respektive der Leuchte, für unterschiedliche Beleuchtungsszenarien ermöglicht ist.

Optional kann vorgesehen sein, dass das Lichtquellen-Trägerelement plattenförmig ist, und insbesondere durch eine einzelne gemeinsame Platine gebildet ist. Hierdurch kann das Lichtquellen-Trägerelement direkt auf der Rückseite der gitterartigen Lichtleiterstruktur angeordnet sein, wobei eine besonders flache Gestaltung des Verbunds aus gitterartigen Lichtleiterstruktur und Lichtquellen-Trägerelement realisiert ist.

Optional kann vorgesehen sein, dass die gitterartige Lichtleiterstruktur an ihren äußeren Seitenflächen bündig mit dem Lichtquellen-Trägerelement abschließt. Hierdurch wird eine besonders ästhetische Anordnung geschaffen, wobei weiterhin die Rückseite der gitterartigen Lichtleiterstruktur, welche bevorzugt transparent ist, gleichmäßig erscheint. Hierbei kann weiterhin vorgesehen sein, dass die gitterartige Lichtleiterstruktur und das Lichtquellen-Trägerelement im Wesentlichen eine identische Umrisscharakteristik hat. Sofern nicht alle Zwischenräume der gitterartigen Lichtleiterstruktur durch Lichtstrahler besetzt sind, kann auch vorgesehen sein, dass das Lichtquellen-Trägerelement an den Stellen ebenfalls Aussparungen hat, an denen weder gitterartige Lichtleiterstruktur oder Lichtstrahler angeordnet sind. Hierdurch wird zum einen Material eingespart, und weiterhin ist die Anordnung zur Lichtabgabe hierdurch besonders ästhetisch. Ebenfalls kann durch solche Aussparungen die Wärmeabgabe der Platine verbessert werden.

Optional kann vorgesehen sein, dass jeder Lichtstrahler in direkter Anlage mit den jeweiligen umrahmend angeordneten Lichtleiterarmen angeordnet ist, wobei der jeweilige Zwischenraum der gitterartigen Lichtleiterstruktur vollständig durch den entsprechenden Lichtstrahler ausgefüllt ist. Hierdurch steht der gesamte Zwischenraum dem Lichtstrahler, bzw. seinen Bestandteilen wie Blende oder Reflektor, zur Verfügung, sodass eine besonders vorteilhafte gerichtete Lichtabgabe ermöglicht ist. Weiterhin wird durch das Schließen des Zwischenraums die Ästhetik der Anordnung insgesamt erhöht, wobei in kompakter Bauweise der Anordnung sowohl diffuse als auch gerichtete Lichtabgabeelemente integriert sind.

Optional kann vorgesehen sein, dass die Anordnung zur Lichtabgabe ein Betriebsmodul aufweist, wobei das Betriebsmodul mechanische und elektrische Verbindungselemente zur Befestigung der Anordnung zur Lichtabgabe an einer Wand und/oder einer Decke und/oder an einem Stromschienensystem aufweist. Hierdurch ist die Anordnung mit Verbindung zu einer Netzspannung betriebsbereit, sodass die Installation der Anordnung zur Lichtabgabe, bzw. der Leuchte, besonders einfach gestaltet ist. Weiterhin lässt die Leuchte, bzw. Anordnung zur Lichtabgabe, sich so in verschiedensten Beleuchtungsszenarien verwenden. Bevorzugt weist das Betriebsmodul Steuerkomponenten zur Ansteuerung und Energieversorgung der Lichtquellen der Anordnung zur Lichtabgabe auf. Hierdurch lassen sich die verschiedenen Lichtquellengruppen (erste und zweite Lichtquellen) der Anordnung zur Lichtabgabe, bzw. der Leuchte, in bequemer und unkomplizierter Weise durch einen Benutzer ansteuern, sodass der Benutzer das über die Lichtstrahler bzw. gitterartige Lichtleiterstruktur abgegebene Licht einstellen kann.

Das Lichtquellen-Trägerelement kann hierbei zusammen mit den unmittelbar damit verbundenen Komponenten wie die gitterartige Lichtleiterstruktur und der zumindest eine Lichtstrahler ein sogenanntes Leuchtmodul bilden, welches verschwenkbar relativ zum Betriebsmodul angeordnet ist.

Optional kann vorgesehen sein, dass die Anordnung zur Lichtabgabe einen Schwenkarm aufweist, welcher das Betriebsmodul mit dem Lichtquellen-Trägerelement, und der damit gekoppelten gitterartigen Lichtleiterstruktur und dem zumindest einen Lichtstrahler, schwenkbar entlang einer Schwenkachse verbindet. Hierdurch lässt sich die Anordnung zur Lichtabgabe (bzw. die Leuchte) in einfacher und flexibler Weise orientieren und entsprechend individueller Beleuchtungswünsche ausrichten. Hierbei kann vorgesehen sein, dass das Lichtquellen-Trägerelement, und somit sämtliche damit verbundenen Komponenten wie die gitterartige Lichtleiterstruktur und der zumindest eine Lichtstrahler, - (also das Leuchtmodul) - sowohl gegen als auch mit dem Uhrzeigersinn über die Schwenkachse relativ zum Betriebsmodul verschwenkt werden können. Hierdurch lässt sich die Anordnung besonders vorteilhaft als Arbeitsplatzbeleuchtung verwenden, da die Richtung der gerichteten Lichtabgabe, bzw. der durch die Leuchte insgesamt beleuchtete Bereich, hierdurch ebenfalls gezielt beeinflussbar ist. Bevorzugt ist das Lichtquellen-Trägerelement in eine erste Schwenkrichtung um bis zu 180° schwenkbar, wobei weiterhin bevorzugt das Lichtquellen-Trägerelement in eine zweite Schwenkrichtung ebenfalls um bis zu 180°, bevorzugt um bis zu 90°, schwenkbar ist.

Optional kann vorgesehen sein, dass jeder Lichtstrahler ein Lichtstrahler-Blende und einen Lichtstrahler-Reflektor aufweist. Die Lichtstrahler-Blende dient hierbei sowohl der Ästhetik, da diese den Bereich zwischen Reflektor und jeweiliger Kante des Lichtleiterarms füllt, als auch der Stabilität des Lichtstrahlers erhöht.

Weiterhin bevorzugt sind die Lichtstrahler-Blende und der Lichtstrahler-Reflektor einstückig ausgebildet, sodass die Stabilität und Ästhetik des Lichtstrahlers weiter erhöht ist. Weiterhin lässt sich so der Lichtstrahler besonders einfach beispielsweise durch ein Spritzgussverfahren herstellen.

Weiterhin bevorzugt ist die Lichtstrahler-Blende eines jeden Lichtstrahlers an die Form der der den jeweiligen Lichtstrahler umgebenden gitterartigen Lichtleiterstruktur angepasst. Hierdurch wird die Ästhetik der Anordnung zur Lichtabgabe weiter erhöht, wobei ebenso die Lichtabstrahlcharakteristik des Lichtstrahlers verbessert ist, da hierdurch unerwünschte Reflexionen an Seitenwänden der Lichtleiterarme der gitterartigen Lichtleiterstruktur vermieden werden.

Optional kann vorgesehen sein, dass jeder Lichtstrahler Kopplungselemente zur reversiblen Kopplung mit dem Lichtquellen-Trägerelement aufweist. Hierbei kann insbesondere vorgesehen sein, dass diese Kopplungselemente einstückig mit der Blende des Lichtstrahlers ausgebildet sind. Mittels der Kopplungselemente lässt sich die Anordnung besonders einfach Zusammenbauen und in Betrieb nehmen. Bevorzugt sind hierbei die Kopplungselemente zur formschlüssigen, und insbesondere einrastenden Halterung ausgebildet, wobei weiter bevorzugt die Kopplung reversibel ist. Hierbei weist das Lichtquellen-Trägerelement entsprechende Aussparungen zur Aufnahme und Halterung der Kopplungselemente auf.

Optional kann vorgesehen sein, dass die ersten Lichtquellen und die zumindest eine zweite Lichtquelle getrennt voneinander ansteuerbar sind. Hierdurch lässt sich eine an ein j eweiliges Beleuchtungsszenario flexibel angepasste Beleuchtung erzielen. Hierbei kann insbesondere vorgesehen sein, dass die Helligkeit und/oder Farbtemperatur der ersten und/oder zweiten Lichtquellen variabel und unabhängig voneinander anpassbar ist. Beispielsweise lässt sich so eine Spotlight-Beleuchtung (wie eine Arbeitsplatzbeleuchtung) durch den zumindest einen Lichtstrahler individuell hinzu- bzw. abschalten, während die diffuse Beleuchtung die Umgebung insgesamt homogen beleuchtet wird, oder vice versa.

Bevorzugt weist die Anordnung zur Lichtabgabe mehrere Lichtstrahler und somit mehrere zweite Lichtquellen auf. Hierdurch lassen sich verschiedene Beleuchtungsszenarien und insbesondere verschiedene gerichtete Beleuchtungen durch eine Anordnung zur Lichtabgabe, bzw. Leuchte, realisieren. Dies ist insbesondere für Anwendungen für Arbeitsplätze, Verkaufsraumbeleuchtungen oder Museen relevant.

Hierbei ist bevorzugt das Verhältnis zwischen der Anzahl an ersten Lichtquellen und zweiten Lichtquellen 1: 1, 1: 1,5 oder 1:2, wodurch eine ausgewogene und ausreichend helle Beleuchtung, zusammengesetzt aus diffuser und gerichteter Beleuchtung, erzielt wird.

Optional kann vorgesehen sein, dass zumindest ein Lichtstrahler eine asymmetrische Lichtabgabe aufweist. Hierdurch lassen sich beispielsweise mehrere Lichtstrahler kombinieren, derart dass diese gemeinsam einen bestimmten Bereich beleuchten.

Weiterhin kann vorgesehen sein, dass zumindest ein Lichtstrahler eine im Wesentlichen elliptische Lichtabgabe aufweist, wobei auch denkbar ist, dass alle Lichtstrahler dieselbe Lichtabgabecharakteristik aufweisen.

Optional kann vorgesehen sein, dass jeweils eine erste Lichtquelle mittels eines Reflexionsabschnitts im Lichteinkoppelbereich der jeweiligen Lichtleiterarme hin zu den Lichtauskoppelstrukturen reflektiert wird, bevorzugt totalreflektiert wird. Hierdurch wird eine besonders effiziente Streuung erreicht, wobei weiterhin mit einer relativ geringen Anzahl an Lichtquellen eine große Lichtabgabefläche für diffuses Licht erzielt werden kann.

Optional ist vorgesehen, dass die ersten Lichtquellen und die zweiten Lichtquellen LEDs aufweisen, wobei die LEDs der beiden Lichtquellengruppen sich hierbei in ihren Lichtabgabeeigenschaften unterscheiden können.

Die Erfindung wird im Folgenden anhand eines Ausführungsbeispiels und mit Bezug auf die Zeichnungen näher erläutert. Es zeigen:
- Figur 1: eine perspektivische schematische Darstellung von schräg oben einer beispielhaften Ausführungsform einer erfindungsgemäßen Anordnung zur Lichtabgabe;
- Figur 2A: eine perspektivische schematische Darstellung von schräg unten einer beispielhaften Ausführungsform einer erfindungsgemäßen Anordnung zur Lichtabgabe;
- Figur 2B: eine vergrößerte Darstellung eines Teilbereichs der perspektivischen schematische Darstellung aus Figur 2A;
- Figur 3: eine Schnittdarstellung eines Teilbereichs einer beispielhaften Ausführungsform einer erfindungsgemäßen Anordnung zur Lichtabgabe;
- Figur 4: eine schematische Seitenansicht einer beispielhaften Ausführungsform einer erfindungsgemäßen Anordnung zur Lichtabgabe; und
- Figur 5: eine schematische Draufsicht einer beispielhaften Ausführungsform einer erfindungsgemäßen Anordnung zur Lichtabgabe.

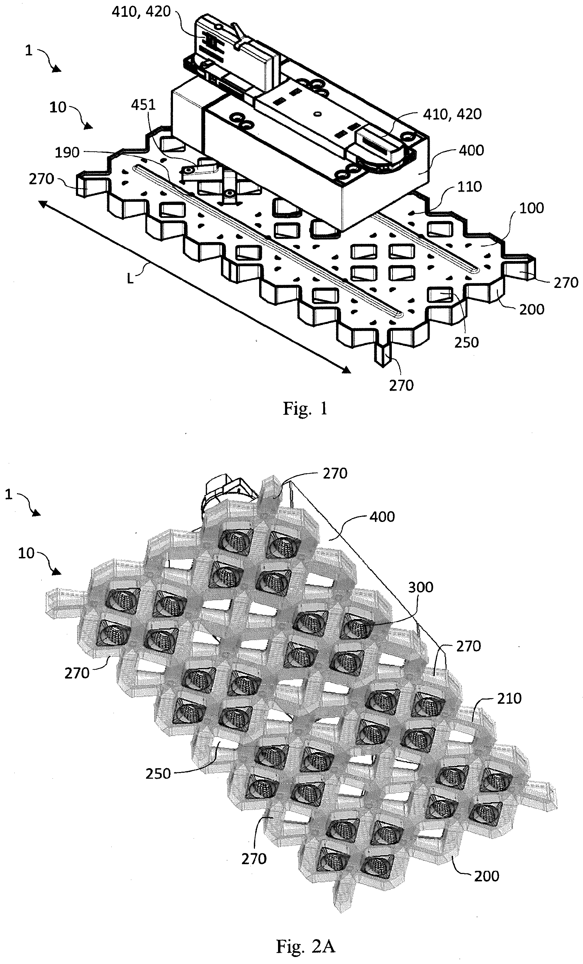

Die Figuren 1 bis 5 zeigen hierbei stets die selbe beispielhafte Ausführungsform einer erfindungsgemäßen Anordnung zur Lichtabgabe 1 (bzw. Leuchte), sodass sämtliche in den Figuren gezeigte Merkmale miteinander kombinierbar sind.

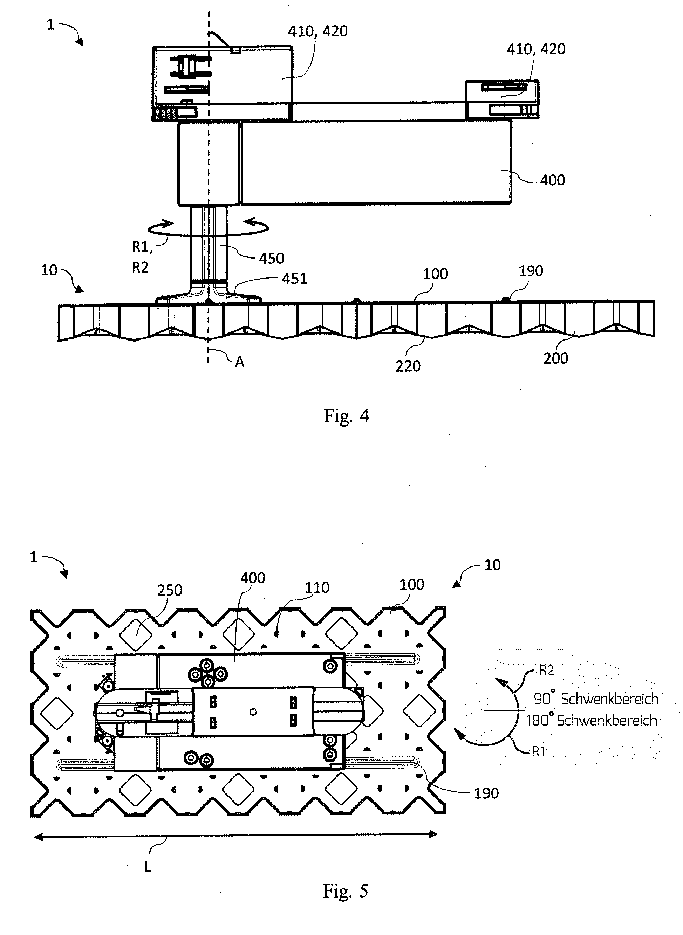

Figur 1 zeigt eine schematische Darstellung einer Ausführungsform einer erfindungsgemäßen Anordnung zur Lichtabgabe 1, welche neben den Komponenten des Leuchtmoduls 10, welches das Lichtquellen-Trägerelement 100, die gitterartige Lichtleiterstruktur 200 und zumindest einen Lichtstrahler 300 umfasst, auch das Betriebsmodul 400 aufweist. Das Betriebsmodul 400 ist hierbei mittels des Schwenkarms 450 mit dem Leuchtmodul 10 schwenkbar verbunden. Die jeweilige Schwenkbewegung R1, R2 um eine Schwenkachse A erfolgt, welche durch den Schwenkarm 450 gebildet ist. Dies ist insbesondere in den Figuren 4 und 6 veranschaulicht.

Die gezeigte Anordnung zur Lichtabgabe 1, und hierbei insbesondere das Lichtquellen-Trägerelement 100 sowie die gitterartige Lichtleiterstruktur 200, erstreckt sich in einer Längsrichtung L, wobei der Schwenkarm 450 in einem ersten Drittel des Leuchtmoduls 10 mit diesem gekoppelt ist, sodass die Rotationsbewegung R1, R2 des Leuchtmoduls 10 relativ zum Betriebsmodul 400 exzentrisch erfolgt.

Das Leuchtmodul 10, beziehungsweise insbesondere das Lichtquellen-Trägerelement 100, ist hierbei mit einem Schwenkarmfuß 451 mittels Befestigungselementen gekoppelt. Hierbei können als Befestigungselemente Schrauben, Nieten oder Ähnliches verwendet werden, welche das Lichtquellen-Trägerelement 100, und auch gitterartige Lichtleiterstruktur 200 mit dem Schwenkarmfuß 451 und somit dem Schwenkarm 450 koppeln.

Das Betriebsmodul 400 kann hierbei direkt an eine Wand oder eine Decke montiert werden, wobei in der gezeigten Ausführungsform auch eine Kopplung mit einem herkömmlichen Stromschienensystem möglich ist. Hierfür weist das Betriebsmodul mechanische und elektrische Verbindungselemente 410, 420 auf. Die mechanischen Verbindungselemente 420 bieten hierbei eine mechanische Kopplung durch Formschluss und/oder Kraftschluss, sodass die Anordnung zur Lichtabgabe 1 sicher montiert ist. Die elektrischen Verbindungselemente 410 hingegen ermöglichen die Stromversorgung der elektronischen Komponenten der Anordnung zur Lichtabgabe 1, wobei weiterhin auch die Anbindung an einen Kommunikationskanal denkbar ist. Insbesondere ist denkbar, dass die elektrischen Verbindungselemente 410 in die mechanischen Verbindungselemente 420 integriert sind, sodass eine mechanische Kopplung des Betriebsmoduls 400 mit einer Stromschiene automatisch auch eine elektrische Kopplung bedingt.

Die gitterartige Lichtleiterstruktur 200 und das Lichtquellen-Trägerelement 100 sind wiederum mittels Verbindungselementen 190 miteinander gekoppelt, wobei die Verbindungselemente 190 hierbei eine Unterstützungsschiene und entsprechende Befestigungselemente beinhalten kann, wie insbesondere den Figuren 1, 4 und 5 entnommen werden kann.

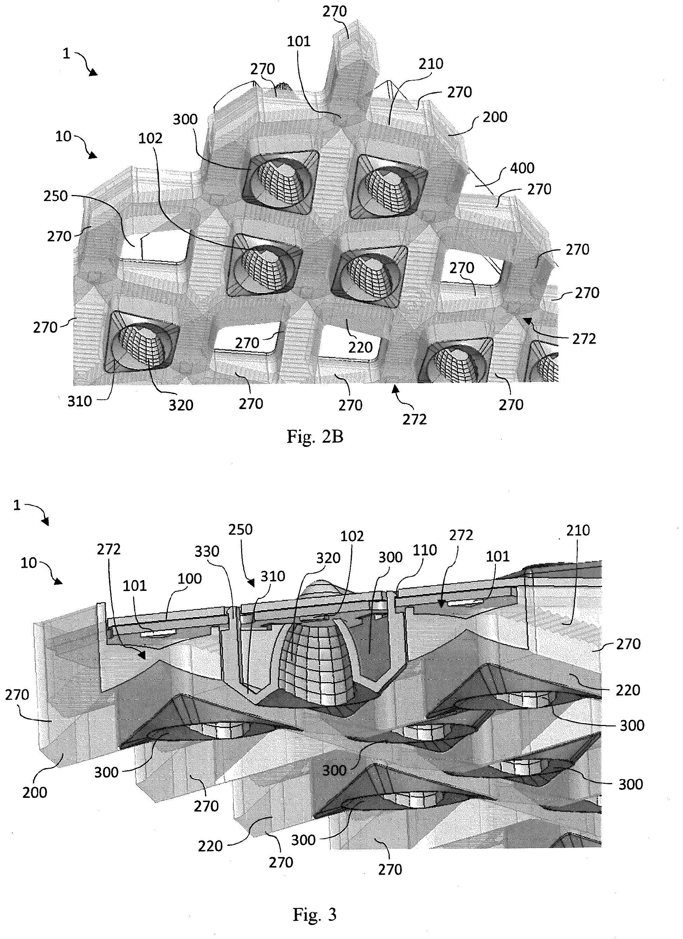

Wie bereits aus Figur 1 ersichtlich ist, weist das Lichtquellen-Trägerelement 100 weiterhin in denjenigen Bereichen in denen die gitterartige Lichtleiterstruktur 200 Zwischenräume 250 aufweist, in welche Lichtstrahlern 300 eingesetzt werden, Aussparungen 110 auf, welche mit entsprechenden Kopplungselementen 330 der jeweiligen Lichtstrahler 300 interagieren, und so die Lichtstrahler 300 sicher halten. Dies ist detailliert in Figur 3 gezeigt.

Der Figur 1 ist ferner zu entnehmen, dass die gitterartige Lichtleiterstruktur 200 an ihren äußeren Seitenflächen bündig mit dem Lichtquellen-Trägerelement 100 abschließt. Weiterhin kann vorgesehen sein, dass die Grundfläche der gitterartigen Struktur 200 stets mit dem Lichtquellen-Trägerelement 100 kontaktiert ist.

Die gitterartige Lichtleiterstruktur 200 selbst besteht aus mehreren Lichtleiterarmen 270, welche jeweils im Wesentlichen diagonal bzw. keilförmig verlaufen, und so eine strukturierte Oberflächenform des Lichtleiters 200 erzeugen. Der genaue Aufbau der Lichtleiterstruktur 200 ist in den Figuren 2A, 2B, 3 und 4 gezeigt. Hierbei ist erkennbar, dass in der vorliegend gezeigten Ausführungsform vier Lichtleiterarme 270 an ihren dem Lichtquellen-Trägerelement 100 zugewandten Stirnseiten 272 zusammentreffen bzw. miteinander verbunden sind, wobei in diesem Bereich jeweils eine erste Lichtquelle 101 vorgesehen ist, welche Licht somit gleichzeitig in die jeweils vorgesehenen Lichtleiterarme 270 (vorliegend vier Lichtleiterarme 270) einkoppelt. Im Bereich dieser stirnseitigen Enden 272 der Lichtleiterarme 270, welche den Lichteinkoppelbereich der Lichtleiterarme 270 bilden, ist jeweils ein Reflexionsabschnitt vorgesehen, welcher das von der jeweiligen ersten Lichtquelle 101 abgegebene Licht totalreflektiert und in Richtung der Lichtauskoppelstruktur 210 des jeweiligen Lichtleiterarms 270 sendet, wodurch eine besonders vorteilhafte Lichtstreuung erzielt wird. Die Lichtauskoppelstrukturen 210 sind jeweils, wie insbesondere in den Figuren 2B und 3 ersichtlich, im Inneren der Lichtleiterarme 270 angeordnet, wobei diese im Wesentlichen parallel zur Oberfläche der Lichtabgabeseite 220 des jeweiligen Lichtleiterarms 270 verlaufen.

An einem dem j eweiligen stirnseitigen Ende 272 eines Lichtleiterarms 270 gegenüberliegenden Ende eines Lichtleiterarms 270 sind wiederum mehrere (in der vorliegenden Ausführung vier) Lichtleiterarme 270 miteinander verbunden, wobei dieser Bereich die größte Erhebung - also den höchsten Punkt - der Oberfläche der Lichtabgabeseite 220 der gitterartige Lichtleiterstruktur 200 bildet, wohingegen die Oberfläche der Lichtabgabeseite 220 im Bereich der stirnseitigen Ende 272 die geringste Erhebung - also den niedrigsten Punkt - bildet. Hierdurch ist im Wesentlichen eine spezifische dreidimensionale Dreieckswellen-Struktur gebildet, welche der gitterartigen Lichtleiterstruktur 200 eine besondere Ästhetik verleiht, und darüber hinaus eine besonders vorteilhafte diffuse Lichtabgabe ermöglicht.

Durch diese so miteinander verbundenen einzelnen Lichtleiterarme 270 entsteht ferner das charakteristische Gitter der Lichtleiterstruktur 200. Insofern erzeugen die jeweiligen Lichtleiterarme 270 Zwischenräume 250, in welche wiederum Lichtstrahlern 300 eingesetzt werden. Wie den Figuren 2A, 2B und 3 explizit entnommen werden kann, kann vorgesehen sein, mehrere Lichtstrahler 300 zu verwenden. Diese Lichtstrahler 300 dienen hierbei einer gerichteten Lichtabgabe, sodass je nach Anwendungsbereich gezielt bestimmte Flächen mit einer Art Spotlight beleuchtet werden können. Hierfür kann vorgesehen sein, dass eine Anordnung zur Lichtabgabe 1 über mehrere identische und/oder unterschiedliche Lichtstrahler 300 verfügt, welche jeweils eine entsprechende Lichtabgabe aufweisen. Maßgeblich kann die Lichtabgabe eines Lichtstrahlers 300 hierbei durch die Gestaltung seines Reflektors 320, und damit zusammenhängend durch die Gestaltung seiner Blende 310 beeinflusst werden. Wie in den Figuren 2B und 3 gezeigt, kann insbesondere vorgesehen sein, dass der Reflektor 320 im Wesentlichen eine elliptische Form aufweist, wobei je nach Anwendungsbereich auch andere Formen denkbar wären. Insbesondere kann vorgesehen sein, dass ein Lichtstrahler 300 asymmetrisch geformt ist, wobei ebenfalls eine asymmetrische Lichtabgabe vorgesehen sein kann, was beispielsweise durch eine asymmetrischen Reflektor 320 erzielt werden kann.

Die Blende 310 eines Lichtstrahlers 300 bedingt allerdings nicht nur die Gestaltung des Reflektors 320 und damit die Lichtabgabe des Strahlers 300, sondern folgt in ihrer Form an der Außenkante des Lichtstrahlers 300 auch der dreidimensionalen Struktur der den jeweiligen Zwischenraum 250 bildenden umgebenden Lichtleiterarme 270 - wie insbesondere den Figuren 2B und 3 entnommen werden kann -, sodass ein annähernd nahtloser Übergang zwischen gitterartiger Lichtleiterstruktur 200 und dem jeweiligen Lichtstrahlen 300 bewerkstelligt ist. Dies schafft ein integriertes und damit besonders ästhetisches Aussehen der Leuchte 1.

Je nach gewünschter Form des Reflektors 320 kann auch vorgesehen sein, dass die Blende 310 eine Erhebung bildet, und somit eine größere Höhe des Reflektors 320 erlaubt, wodurch wiederum die Lichtabgabe des jeweiligen Lichtstrahlers 300 beeinflusst wird - wie beispielhaft in den Figuren 2B und 3 gezeigt. Hierbei kann die Blende 310 eine kraterförmige Öffnung für den Reflektor 320 bilden.

Bevorzugt ist der Reflektor 320 und die Blende 310 einstückig gebildet. Dies ist beispielhaft in der Figur 3 angedeutet. Die Kopplungselemente 330 sind im dem Lichtquellen-Trägerelement 100 zugewandten Bereich des Lichtstrahlers 300 gebildet, und können - wie ebenfalls in Figur 3 angedeutet - integral mit der Blende 310 ausgebildet sein. Bevorzugt sind diese Kopplungselemente 330 für eine formschlüssige Halterung, beispielsweise durch Rastnasen, gebildet, wobei diese Kopplungselemente 330 mit entsprechenden komplementären Kopplungselementen 110 des LichtquellenTrägerelements, beispielsweise Aussparungen 110, interagieren und somit einen festen und sicheren Halt des jeweiligen Lichtstrahlers 300 erzielen.

Die Figur 3 zeigt ferner, dass die ersten und zweiten Lichtquellen 101, 102 auf einer gemeinsamen Platine 100 angeordnet sind. Hierbei ist ferner denkbar, dass die ersten und zweiten Lichtquellen 101, 102 unabhängig voneinander von einer Steuerkomponente bzw. einem Steuergerät, welches sich bevorzugt im Betriebsmodul 400 befindet, angesteuert werden können, sodass individuell und flexibel die Farbtemperatur und oder Helligkeit der einzelnen Gruppen an Lichtquellen 101, 102 eingestellt werden können.

Ferner ist denkbar, dass die ersten Lichtquellen 101 eine von den zweiten Lichtquellen 102 verschiedene physische Spezifikation (beispielsweise hinsichtlich Größe, Lichtabgabefläche, Farbtemperatur, minimale/maximale Leistungsaufnahme, etc.) aufweisen. Selbstverständlich ist ebenfalls denkbar, dass die ersten und zweiten Lichtquellen 101, 102 identische physische Spezifikationen haben.

Wie den Figuren 1, 2A, 2B und 5 entnommen werden kann, kann vorgesehen sein, dass das Lichtquellen-Trägerelement 100 in Bereichen von Zwischenräumen 250 der gitterartigen Lichtleiterstruktur 200, in denen keine Lichtstrahler 300 vorgesehen sind, ebenfalls Aussparungen aufweisen. Dies fördert die Wärmeabgabe des Leuchtmoduls 10, da durch die Aussparungen und die jeweiligen Zwischenräume 250 Luftkanäle gebildet sind. Ferner wird hierdurch die Ästhetik der Anordnung zur Lichtabgabe 1 erhöht, da die gitterartige Struktur des Lichtleiters 200 auf das Leuchtmodul 10 übertragen ist, und somit der Leuchte 1 ein besonderes Aussehen verleiht.

Wie insbesondere in der Figur 2A gezeigt, kann vorgesehen sein, dass nicht alle Zwischenräume 250 der gitterartigen Lichtleiterstruktur 200 mit Lichtstrahlern 300 besetzt sind. Bevorzugt besteht ein Verhältnis von 1: 1 hinsichtlich der Anzahl an ersten Lichtquellen 101 und zweiten Lichtquellen 102, wie in der Figur 2A gezeigt. Allerdings ist auch denkbar, dass weniger zweite Lichtquellen 102 - also beispielsweise in einem Verhältnis von 1:0,5 - vorhanden sind. Ebenfalls können auch mehr Lichtstrahler 300, und somit mehr zweite Lichtquellen 102 - also beispielsweise in einem Verhältnis von 1: 1,5 oder 1:2 - vorgesehen sein, wobei nicht mehr Lichtstrahler 300 (und somit zweite Lichtquellen 102) als Zwischenräume 250 vorsehbar sind.

Durch den sowohl am Betriebsmodul 400 als auch am Leuchtmodul 10 exzentrisch angeordneten Schwenkarm 450 lässt sich das Leuchtmodul 10 durch Rotation um die Achse A in eine Richtung R1 oder R2 flexibel anordnen. Hierbei ist insbesondere vorgesehen, dass das Leuchtmodul sowohl in eine erste Richtung R1 als auch in einer zweiten Richtung R2 um bis zu 180° geschwenkt werden kann. Ferner kann vorgesehen sein, dass die maximale Bewegung in die zweite Richtung R2 lediglich 90° beträgt, wie in den Figuren 4 und 5 angedeutet ist. Hierbei kann vorgesehen sein, dass der Schwenkarm 450 hohl ist, und Drähte zur Stromversorgung des Leuchtmoduls 10 im Inneren des Schwenkarms 450 angeordnet sind. Durch die Begrenzung des Schwenkbereichs in den Richtungen R1 und R2 wird hierbei sichergestellt, dass die mechanische Beanspruchung dieser Drähte minimiert wird, und somit die Lebensdauer der Anordnung zur Lichtabgabe 1 erhöht wird. Weiterhin lässt sich so das Leuchtmodul 10 der Anordnung zur Lichtabgabe 1 individuell in Relation zur jeweiligen Befestigung der Leuchte 1, beispielsweise an einer Stromschiene, positionieren.

Durch die direkte Kopplung des Lichtquellenträgerelements 100 und der gitterartigen Lichtleiterstruktur 200, und die in die Zwischenräume 250 der Lichtleiterstruktur 200 eingesetzten Lichtstrahler 300 wird ein besonders flacher und kompakter Aufbau des Leuchtmoduls 10 bewerkstelligt. Hierdurch erscheint die Anordnung zur Lichtabgabe 1 besonders elegant und ästhetisch, wobei zudem durch die möglichst geringe Aufbauhöhe des Leuchtmoduls 10 und der individuell anpassbaren Länge des Schwenkarms 450 unterschiedliche Beleuchtungsszenarien durch die Leuchte 1 bedient werden können.

Durch die gleichzeitige Verwendung von gerichteter und diffuser Lichtabgabe durch die erfindungsgemäße Anordnung zur Lichtabgabe 1 wird eine Leuchte 1 mit einer besonders vorteilhaften Lichtqualität geschaffen, wobei die unterschiedlichen Lichtabgaben synergistisch zusammenwirken. Durch den Schwenkbereich in die Richtungen R1 und R2 lässt sich die Anordnung zur Lichtabgabe 1 ferner besonders flexibel und einfach an jeweilige Beleuchtungsszenarien (beispielsweise zur Arbeitsplatzbeleuchtung) anpassen, wobei die Position des Leuchtmoduls 10 selbst bei Kopplung mit einer starren Stromschiene veränderbar ist. Insofern ermöglicht die so geschaffene Anordnung zur Lichtabgabe 1 eine individuell optimierte Beleuchtung sowohl eines konkreten Arbeitsplatzbereichs durch die gerichtete Lichtabgabe als auch des Arbeitsraums, bzw. die Decke und Umgebung des Arbeitsplatzbereichs durch die diffuse Lichtabgabe. Somit erfüllt die erfindungsgemäße Leuchte 1 die Arbeitsplatznormen hinsichtlich der Beleuchtungserfordernisse.

## Patentansprüche

1. Anordnung zur Lichtabgabe (1) aufweisend:
- ein Lichtquellen-Trägerelement (100), auf welchem Lichtquellen (101, 102), umfassend erste Lichtquellen (101) und zumindest eine zweite Lichtquelle (102), angeordnet sind;
- eine gitterartige Lichtleiterstruktur (200) zur diffusen Lichtabgabe über eine Lichtabgabeseite (220),
wobei die gitterartige Lichtleiterstruktur (200) durch Lichtleiterarme (270) gebildet ist,
wobei an stirnseitigen Enden (272) der Lichtleiterarme (270) die ersten Lichtquellen (101) angeordnet sind, deren Licht in die Lichtleiterarme (270) eingekoppelt wird,
wobei die Lichtleiterarme (270) Lichtauskoppelstrukturen (210) auf einer dem Lichtquellen-Trägerelement (100) zugewandten Seite der gitterartigen Lichtleiterstruktur (200) aufweisen,
wobei die Lichtabgabeseite (220) der gitterartigen Lichtleiterstruktur (200) auf der den Lichtauskoppelstrukturen (210) gegenüberliegenden Seite der gitterartigen Lichtleiterstruktur (200) ist;
- zumindest einen Lichtstrahler (300) zur gerichteten Lichtabgabe,
wobei jeder Lichtstrahler (300) in einem Zwischenraum (250) der gitterartigen Lichtleiterstruktur (200) angeordnet ist, und
wobei jedem Lichtstrahler (300) eine zweite Lichtquelle (102) zugeordnet ist.

2. Anordnung zur Lichtabgabe gemäß Anspruch 1,
wobei das Lichtquellen-Trägerelement (100) plattenförmig ist, und insbesondere durch eine einzelne gemeinsame Platine gebildet ist.

3. Anordnung zur Lichtabgabe gemäß Anspruch 1 oder 2,
wobei die gitterartige Lichtleiterstruktur (200) an ihren äußeren Seitenflächen bündig mit dem Lichtquellen-Trägerelement (100) abschließt.

4. Anordnung zur Lichtabgabe gemäß einem der vorherigen Ansprüche 1 bis 3,
wobei jeder Lichtstrahler (300) in direkter Anlage mit den jeweiligen umrahmend angeordneten Lichtleiterarmen (270) angeordnet ist,
wobei der jeweilige Zwischenraum (250) der gitterartigen Lichtleiterstruktur (200) vollständig durch den entsprechenden Lichtstrahler (300) ausgefüllt ist.

5. Anordnung zur Lichtabgabe gemäß einem der vorherigen Ansprüche 1 bis 4,
wobei die Anordnung zur Lichtabgabe (1) ein Betriebsmodul (400) aufweist,
wobei das Betriebsmodul (400) mechanische und elektrische Verbindungselemente (410, 420) zur Befestigung der Anordnung zur Lichtabgabe (1) an einer Wand und/oder einer Decke und/oder an einem Stromschienensystem aufweist,
und wobei bevorzugt das Betriebsmodul (400) Steuerkomponenten zur Ansteuerung und Energieversorgung der Lichtquellen (101, 102) der Anordnung zur Lichtabgabe (1) aufweist.

6. Anordnung zur Lichtabgabe gemäß Anspruch 5,
wobei die Anordnung zur Lichtabgabe (1) einen Schwenkarm (450) aufweist, welcher das Betriebsmodul (400) mit dem Lichtquellen-Trägerelement (100), und der damit gekoppelten gitterartigen Lichtleiterstruktur (200) und dem zumindest einen Lichtstrahler (300), schwenkbar entlang einer Schwenkachse (A) verbindet,
wobei bevorzugt das Lichtquellen-Trägerelement (100) in eine erste Schwenkrichtung (R1) um bis zu 180° schwenkbar ist,
und wobei weiterhin bevorzugt das Lichtquellen-Trägerelement (100) in eine zweite Schwenkrichtung (R2) um bis zu 90° schwenkbar ist.

7. Anordnung zur Lichtabgabe gemäß einem der vorherigen Ansprüche 1 bis 6,
wobei jeder Lichtstrahler (300) ein Lichtstrahler-Blende (310) und einen Lichtstrahler-Reflektor (320) aufweist,
wobei bevorzugt die Lichtstrahler-Blende (310) und der Lichtstrahler-Reflektor (320) einstückig ausgebildet sind,
wobei bevorzugt die Lichtstrahler-Blende (310) eines jeden Lichtstrahlers (300) an die Form der der den jeweiligen Lichtstrahler (300) umgebenden gitterartigen Lichtleiterstruktur (200) angepasst ist.

8. Anordnung zur Lichtabgabe gemäß einem der vorherigen Ansprüche 1 bis 7,
wobei jeder Lichtstrahler (300) Kopplungselemente (330) zur reversiblen Kopplung mit dem Lichtquellen-Trägerelement (100) aufweist,
wobei bevorzugt die Kopplungselemente (300) zur formschlüssigen, und insbesondere einrastenden Halterung ausgebildet sind,
wobei das Lichtquellen-Trägerelement (100) entsprechende Aussparungen (110) zur Aufnahme und Halterung der Kopplungselemente (330) aufweist.

9. Anordnung zur Lichtabgabe gemäß einem der vorherigen Ansprüche 1 bis 8,
wobei die ersten Lichtquellen (101) und die zumindest eine zweite Lichtquelle (102) getrennt voneinander ansteuerbar sind,
wobei bevorzugt die Anordnung zur Lichtabgabe (1) mehrere Lichtstrahler (300) und somit mehrere zweite Lichtquellen (102) aufweist,
wobei bevorzugt das Verhältnis zwischen der Anzahl an ersten Lichtquellen (101) und zweiten Lichtquellen (102) 1:1, 1:1,5 oder 1:2 ist.

10. Anordnung zur Lichtabgabe gemäß einem der vorherigen Ansprüche 1 bis 9,
wobei zumindest ein Lichtstrahler (300) eine asymmetrische Lichtabgabe aufweist, und/oder
wobei zumindest ein Lichtstrahler (300) eine im Wesentlichen elliptische Lichtabgabe aufweist.
